# EUROPEAN PATENT APPLICATION

(11) **EP 4 282 748 A1**
(43) Date of publication of application: **29.11.2023**
(21) Application number: 23175858.2
(22) Date of filing: 26.05.2023
(51) Int. Cl.: B64C 1/06, B64C 1/12, B64G 1/22

(54) **STIFFENER INTEGRATION IN AN ISOGRID STRUCTURE**

(30) Priority: 26.05.2022 CA 3160533
(71) Applicant: Airbus Canada Limited Partnership, Mirabel, QC J7N 3C6 (CA)
(72) Inventor: COUDOUENT, Gérard, Mirabel, J7N 3C6 (CA); DURET, Philippe, Mirabel, J7N 3C6 (CA); GUIBBAL, Daniel, Mirabel, J7N 3C6 (CA)
(74) Representative: den Braber, Gérard Paul

(57) **Abstract**

There is provided a system for stiffener integration in an ISOGRID structure. The modified ISOGRID structure comprises an ISOGRID panel (14); and at least one added stiffener (10) attached to the ISOGRID panel (14). The added stiffener (10) can be attached by welding, gluing or bolting the stiffener to the ISOGRID panel (14). The modified ISOGRID panel (14) has a pad-up in place of one of the ribs of the triangular pockets, wherein the added stiffener (10) is affixed to the pad-up.

## Description

### TECHNICAL FIELD

In general, this disclosure relates to ISOGRID^{™} structures and integration of additional stiffeners therein.

### BACKGROUND

An ISOGRID^{™} structure may be used in aircraft, aeronautics and spacecraft applications, for example. A typical ISOGRID structure is partially hollowed-out and formed from a single metal plate or face sheet with triangular integral stiffening ribs. The structure is created with a repeated pattern of triangles which exploits the principle that triangular structures are strong and distribute loads evenly and efficiently.

Stiffeners are commonly used in structural design. In the case of an ISOGRID structure, the stiffeners are commonly attached to the back, as is the case on aircraft wing junction ribs, for example. Unfortunately, the presence of these elements on the back of the panel prohibits the placement of pipes, such as, for example, fuel or hydraulic pipes or generate manufacturing constraints, for example, tooling.

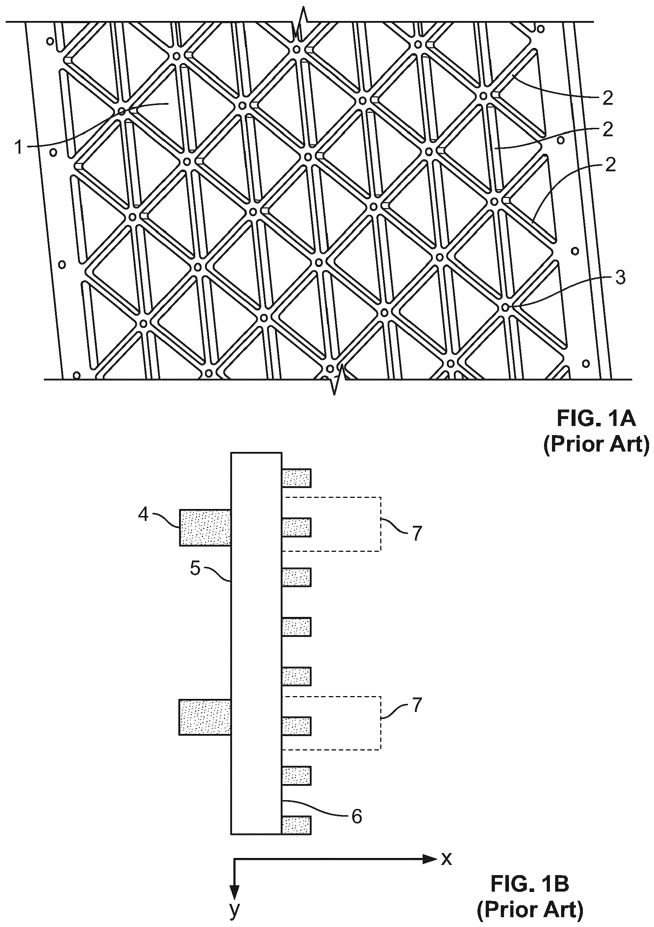

Figure 1A shows an example of a portion of a typical ISOGRID panel. Triangular pockets 1 are machined from a panel that could be composed of an aluminum alloy panel, a titanium panel or other metal. This structure includes ribs 2 and nodes 3. Nodes 3 are at the intersection of the ribs 2 from different directions. The triangular pockets could also be known as triangular cells.

Figure 1B shows a schematic top view of an ISOGRID panel in which stiffeners 4 are fixed on the opposite face 5 of the ISOGRID face 6. Such an arrangement presents several disadvantages, such as a lack of space on the opposite face 5 for fuel pipes or other systems. In addition, when assembling such a panel in the final environment, the stiffeners 4 make assembly difficult and special tools must be designed and used to take into account the existence of these stiffeners on the opposite face 5. During assembly, the stiffeners 4 of the panel must be aligned with the frames 7 of the aircraft above and/or below the panel; however even with such an alignment, the difference in location between the longitudinal location of the stiffeners and frames along the x-axis creates an undesirable bending moment around the y-axis.

### SUMMARY

In one aspect, there is provided an ISOGRID structure, comprising: a modified ISOGRID panel having at least one pad-up formed along an edge of adj acent triangular pockets; and at least one added stiffener attached to the ISOGRID panel on the at least one pad-up.

In a further aspect, there is provided an ISOGRID structure wherein the at least one added stiffener comprises at least one mouse hole which forms a tunnel for the triangular pockets of the ISOGRID panel to pass beneath the added stiffener. In yet a further aspect, the at least one mouse hole is edged to provide reinforcement.

In yet a further aspect, there is provided an ISOGRID structure wherein the triangular pockets are formed from ribs and the pad-up is located on the modified ISOGRID panel in place of one of the ribs.

In yet a further aspect, there is provided an ISOGRID structure wherein the at least one added stiffener has a bottom flange. The bottom flange may optionally be thicker than the pad-up formed along the edge of adjacent triangular pockets of the ISOGRID panel. The at least one added may optionally be tapered along the length thereof. The bottom flange of the at least one added stiffener may optionally comprise at least one of glue, welding or bolts for attachment to the ISOGRID panel.

In yet further aspects, there are provided a panel as defined in claim 10, a stiffened panel as defined in claim 11, and a flight-capable vehicle as defined in claim 15. The flight-capable vehicle may be, for example, an aircraft or a spacecraft, or a combination of both.

### BRIEF DESCRIPTION OF THE DRAWINGS

The invention will be further understood from the following description with reference to the attached drawings.
Figure 1A illustrates a front view of a prior art ISOGRID structure.
Figure 1B illustrates a top view of a schematic of a typical ISOGRID structure assembly.
Figure 2A illustrates a front perspective view of a modified ISOGRID panel of the present invention applied to a portion of an aircraft structure.
Figure 2B illustrates a front perspective view of a modified ISOGRID panel and stiffeners according to the present invention.
Figure 2C illustrates a top view of a schematic of a modified ISOGRID structure assembly according to the present invention.
Figure 3A illustrates a schematic of the present invention including additional stiffeners on a modified ISOGRID panel.
Figure 3B illustrates the added stiffeners.
Figures 4A and 4B provide close-up views of the mouse holes of the added stiffener.
Figure 5 illustrates an example shape and thickness of an added stiffener relative to the panel.

### DETAILED DESCRIPTION

The exemplary embodiments of the present disclosure are described and illustrated below for example purposes only. Of course, it will be apparent to those of ordinary skill in the art that the embodiments discussed below are exemplary in nature and may be reconfigured without departing from the scope and spirit of the present disclosure. However, for clarity and precision, the exemplary embodiments as discussed below may include optional steps, methods, and features that one of ordinary skill should recognize as not being a requisite to fall within the scope of the present disclosure.

In one aspect of the present invention there is provided a system and structure for integrating stiffeners on an ISOGRID panel by substituting an added stiffener for the rib or ribs forming the edges of the triangular pockets of a typical ISOGRID panel. The previous ISOGRID panel is modified to remove a complete line of ribs, thereby making space for addition of an added stiffener on the ISOGRID face 6.

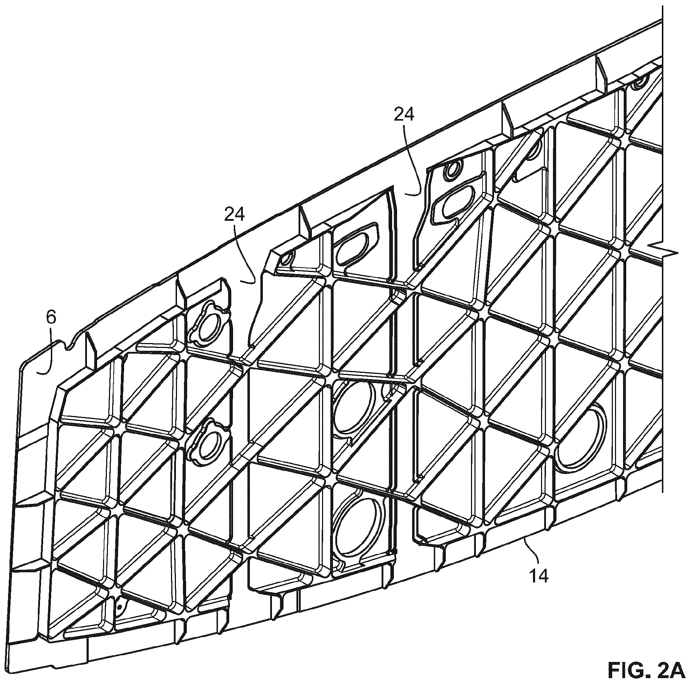

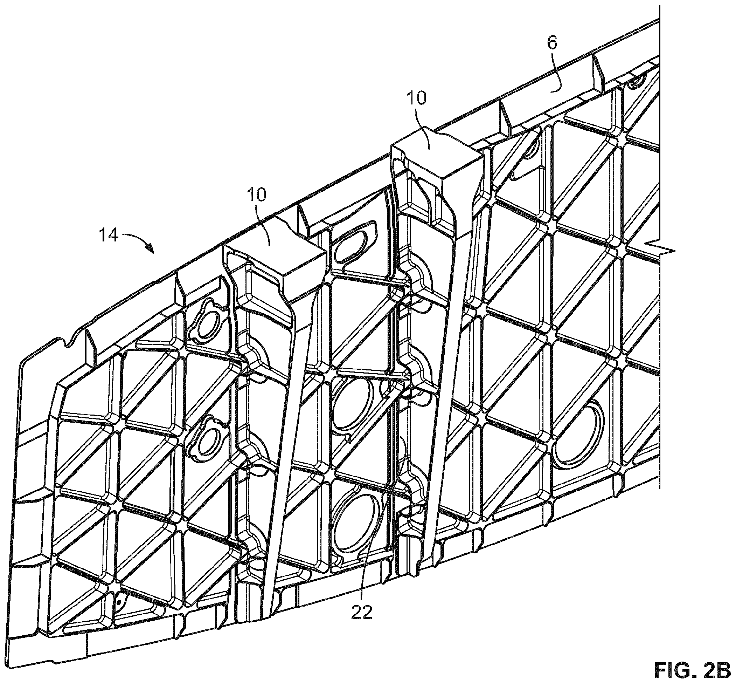

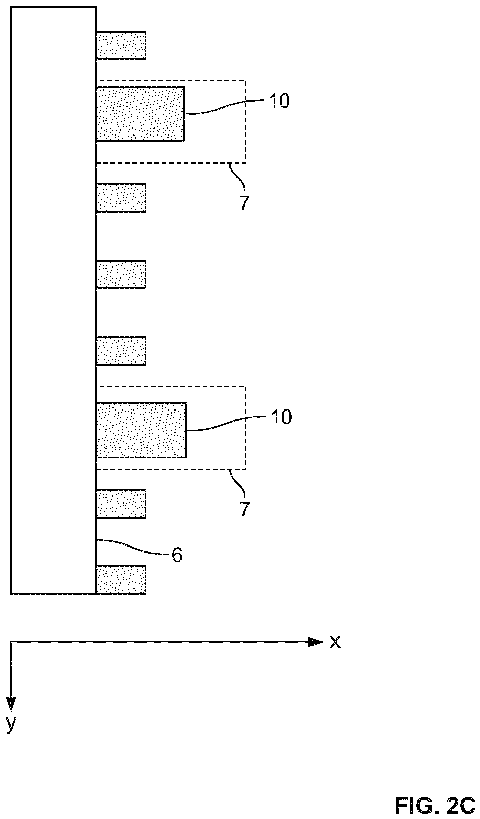

Figure 2A shows a modified ISOGRID panel 14 having pad-up 24 where the ribs were removed along portions of the ISOGRID face 6. Figure 2B shows a front perspective view of the modified ISOGRID structure of the present invention with the added stiffeners as applied within a portion of an aircraft structure. Figure 2C shows a schematic top view of a modified ISOGRID panel in which added stiffeners 10 are fixed on the ISOGRID face 6 in place of preexisting ribs in the previous ISOGRID structure. From this view, it can be seen that during assembly, the frames 7 of the aircraft located above or below the ISOGRID structure align with the added stiffeners 10 to eliminate any bending moment around the y-axis.

Figure 2B illustrates one example embodiment of the modified ISOGRID panel 14 having added stiffeners 10 on the ISOGRID face 6. The modified ISOGRID panel 14 is manufactured in order to create a specific area, referred to as pad-up 24, on which the added stiffener(s) are located and fixed in place. The location of the added stiffeners 10 within the pad-up 24 maintains the mechanical behaviour of the entire panel by aligning the pad-up with the location of ribs in the previous ISOGRID panel. In this manner, the added stiffener takes the place of the rib or ribs such that the triangular shape is maintained and the loads are distributed correctly. The location of the added stiffeners in place of ribs minimizes duplication and avoids excess weight. The preferred location of the pad-up 24 is along one side of the triangles formed from the line of ribs, in order to replace the side of the triangle formed by the ribs with the added stiffener, thereby maintaining the triangular pocket structure.

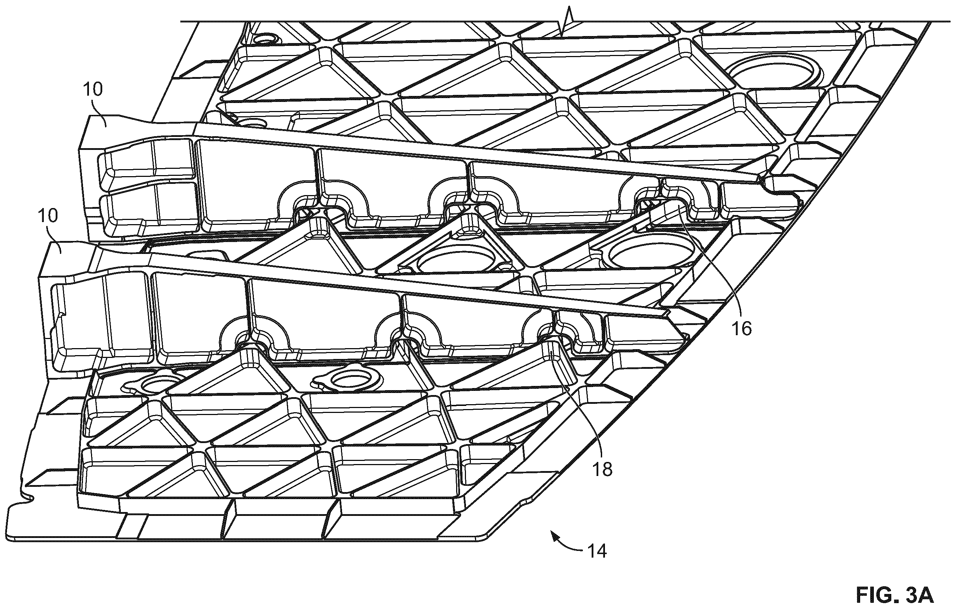

Figure 3A highlights the function of the integrated stiffener structure. The added stiffeners 10 are located to align with a line of stiffening ribs 2 (see Figure 1A) of the previous ISOGRID structure. The line of stiffening ribs 2 are replaced by the added stiffeners 10 which have a higher thickness and provide additional strength. The added stiffeners 10 may be tapered as illustrated, or alternatively, may be untapered with equal width and/or height across the length. The layout of the modified ISOGRID panel 14 remains intact through the use of recesses, referred to as mouse holes 16, in the added stiffeners 10. This allows the layout of the ISOGRID panel to continue through/under the mouse holes 16 at the nodes 18. The mouse holes 16 are edged to provides reinforcement for the mouse holes 16. In this way, the ISOGRID panel 14 intersects the added stiffeners 10 at a node 18 of the ISOGRID panel 14 in a location where there was previously a line of stiffening ribs 2. The mouse holes 16 minimize the impact of the added stiffeners 10 by permitting the ISOGRID panel 14 to remain intact beneath the added stiffeners 10.

The form and structure of the ISOGRID pockets, i.e. the triangles, are not modified, therefore the ISOGRID pockets are not weakened since the structure is preserved and loads are correctly transferred within the panel.

The present structure is further optimized compared to previous ISOGRID structures which provided stiffening at the back of the structure. The added stiffeners 10 of the present invention do not duplicate the ribs of the ISOGRID network, thus there is no double stiffening. In this manner, the structure of the ISOGRID panel is preserved and loads are correctly transferred within the panel, while avoiding excess weight.

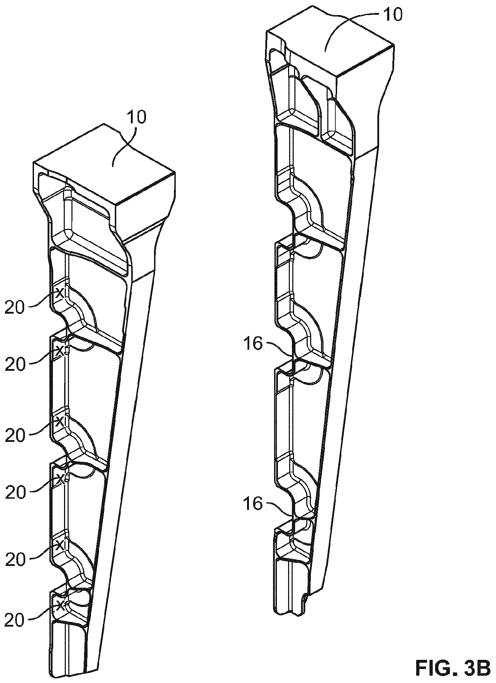

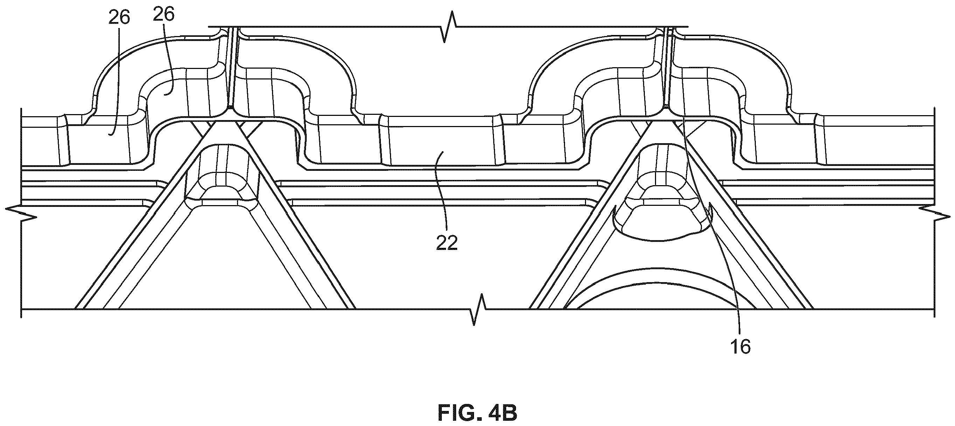

The added stiffeners may be attached through various attachment mechanisms, such as with a bolted assembly, by gluing, or by welding, such as Friction Stir Welding for example. The added stiffeners 10 have a bottom flange 22 (illustrated in Figure 4B) which may be suitable for the use of bolts or for welding or gluing between the bottom flange 22 and the ISOGRID panel 14. Figure 3B illustrates example bolt locations 20 along the flange on either side of the mouse holes 16. Such bolt locations 20 can be used throughout the added stiffeners 10, wherever needed.

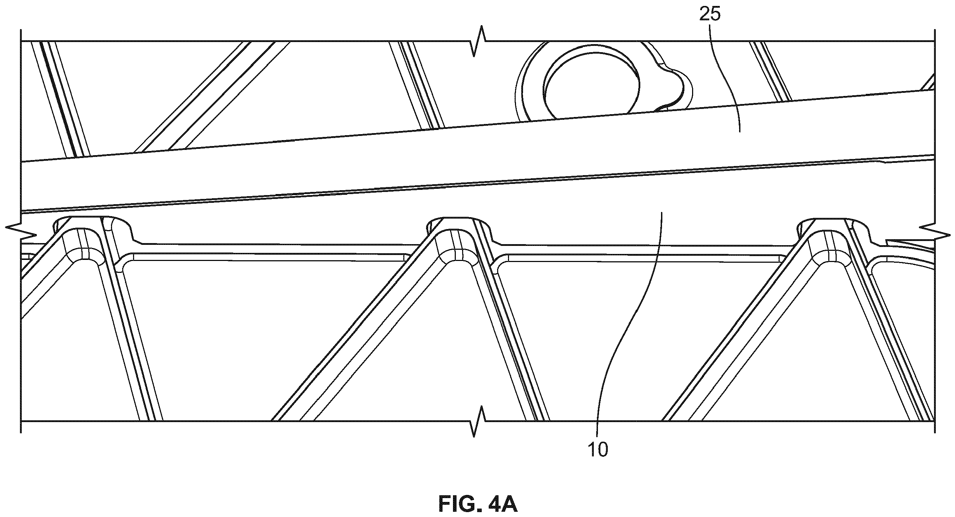

Figures 4A and 4B show enlarged fragmentary views of the modified ISOGRID structure. Figure 4A shows a rear view illustrating the top of the added stiffener 10 and the cap 25, while Figure 4B illustrates a front view of the added stiffener. It can be seen in this example embodiment that the added stiffener 10 includes mouse holes 16 which provide a tunnel or throughput for the ISOGRID panel 14 to pass through underneath the mouse holes 16 without altering the ISOGRID panel 14. The mouse holes 16 may optionally be edged, i.e. have an edging 26 which reinforces the mouse holes 16 and provides strength in those areas.

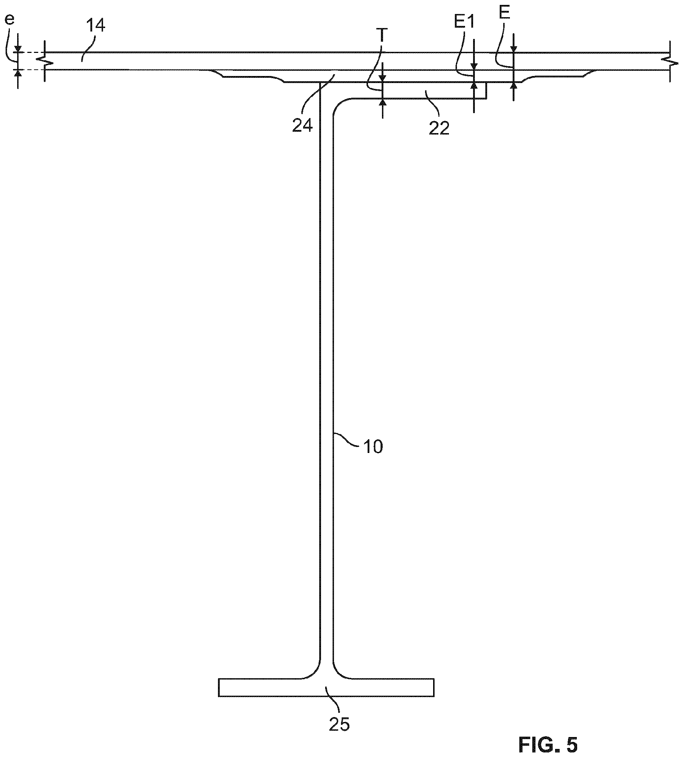

In one example embodiment illustrated in Figure 5, an added stiffener 10 has a bottom flange 22 on one side or both sides and a cap 25 on top. The cross-sectional shape of the added stiffener could take the form of a "T", an "L", an "I", an omega or other forms. For example, if in the shape of an I, the bottom flange 22 forms the bottom portion of the I and sits relatively flat against the pad-up 24. Figure 5 illustrates an "L" shape. During manufacture, the pad-up 24 of the ISOGRID panel 14 may be machined to receive the bottom flange 22 of the added stiffener 10 thereon. The pad-up 24 may optionally serve to add a greater thickness than the thickness e of the recess or bottom of the triangular pockets of the panel. In this case, the combined thickness of the pad-up 24 and triangular pockets, called E, would be greater than e, i.e. E > e. The thickness of both the pad-up 24 and the bottom flange 22 of the added stiffener 10 may optionally be calculated and designed such that the load transfer capacity between the ISOGRID panel and added stiffener is equivalent in order to maintain the mechanical characteristics of the panel and the isotropic behaviour of the panel including the added stiffeners 10. For example, the thickness e of the ISOGRID triangular pockets is 2 mm, the pad-up 24 may have a thickness E1 of 3 mm and the bottom flange 22 of the added stiffener 10 may have a thickness T of 5 mm, such that the load transfer capacity is not modified by the assembly. In the foregoing example, T = E = e+E1, which also provides the relationship such that the thickness E1 of the pad-up is equal to the total thickness minus the thickness of the panel 14, i.e. E1 = E-e. The bottom flange thickness T may be greater than or equal to the pocket thickness e plus the pad-up thickness E1; i.e. T ≥ e + E1. Conversely, it is also possible for the bottom flange thickness T to be less than the pocket thickness e plus the pad-up thickness E1; i.e. T < e + E1.

The added stiffeners 10 can be placed on the modified ISOGRID panel 14 in locations that fit best. For example, the pad-up 24 may be provided with space for the attachment mechanism of the added stiffener, e.g. bolt assembly, glue, welding or other means of fastening the added stiffener 10 to the ISOGRID panel 14. While the drawings show example areas for attachment of the added stiffeners based on the form of ISOGRID panel illustrated therein, other locations for the added stiffeners could also be suitable dependent upon the ISOGRID panel layout.

The embodiments discussed hereinbefore thus relate to a panel referred to as modified ISOGRID panel 14. This panel 14 has a textured face, referred to as ISOGRID 6 face, comprising triangularly arranged ribs and a thickened area referred to as pad-up 24. The thickened area 24 is adapted to receive a stiffener 10 as illustrated in Figure 5. When the stiffener 10 is placed on the thickened area 24, triangular pockets are formed, which are delimited by the stiffener 10 and at least some of the ribs extending to the thickened area 24 as illustrated in Figures 2A and 2B. It should be noted that the thickened area 24 may be an integral part of the panel 14, which may be formed by machining a raw panel, instead of being formed by addition of a thickening element.

It will be appreciated by one skilled in the art that variants can exist in the above-described arrangements and applications. For example, the layout of the added stiffeners can vary depending upon the initial ISOGRID structure and layout. In addition, the manner of connection of the added stiffeners to the ISOGRID structure can vary beyond welding, glue or bolts. Although the drawings illustrate multiple added stiffeners, it would be possible to use only one added stiffener depending upon the needs of the application and the layout of the ISOGRID panel. Similarly, while the drawings illustrate multiple mouse holes, it would be possible to use a single mouse hole depending upon the needs of the application and the layout of the ISOGRID panel. In addition, the ISOGRID panel can be flat or curved and the invention could be applied on a simple or double curvature panel. In a further variation, the pad-up 24 is not formed with a thickness, such that the pad-up 24 is flush with the recess of bottom of the triangular pockets. In another variation, the pad-up 24 is formed such that thickness E is less than the thickness e of the ISOGRID triangular pockets.

Following from the above description, it should be apparent to those of ordinary skill in the art that, while the methods and apparatuses herein described constitute exemplary embodiments of the present invention, the invention described herein is not limited to any precise embodiment and that changes may be made to such embodiments without departing from the scope of the invention as defined by the claims. Consequently, the scope of the claims should not be limited by the preferred embodiments set forth in the examples but should be given the broadest interpretation consistent with the description as a whole. Likewise, it is to be understood that it is not necessary to meet any or all of the identified advantages or objects of the invention disclosed herein in order to fall within the scope of any claims, since the invention is defined by the claims and since inherent and/or unforeseen advantages of the present invention may exist even though they may not have been explicitly discussed herein.

## Claims

1. An ISOGRID structure, comprising:
- a modified ISOGRID panel (14) having at least one pad-up (24) formed along an edge of adj acent triangular pockets; and
- at least one added stiffener (10) attached to the modified ISOGRID panel on the at least one pad-up.

2. The ISOGRID structure of claim 1 wherein the at least one added stiffener (10) comprises at least one mouse hole (16) which forms a tunnel for the triangular pockets of the modified ISOGRID panel (14) to pass beneath the added stiffener.

3. The ISOGRID structure of claim 2 wherein said at least one mouse hole (16) is edged to provide reinforcement.

4. The ISOGRID structure of any one of claims 1 to 3, wherein the triangular pockets are formed from ribs and the pad-up (24) is located on the modified ISOGRID panel in place of one of the ribs.

5. The ISOGRID structure of any one of claims 1 to 4, wherein the at least one added stiffener (10) has a bottom flange (22).

6. The ISOGRID structure of claim 5, wherein the bottom flange (22) is thicker than the pad-up (24) formed along the edge of adjacent triangular pockets of the modified ISOGRID panel (14).

7. The ISOGRID structure of any one of claims 1 to 6, wherein the at least one added stiffener (10) is tapered along the length of the at least one added stiffener.

8. The ISOGRID structure of claim 5 or 6, wherein the bottom flange (22) of the at least one added stiffener (10) comprises at least one of glue, welding or bolts for attachment to the modified ISOGRID panel (14).

9. The ISOGRID structure of claim 5 or 6 wherein the at least one pad-up (24) has a thickness (E1), the bottom flange (22) has a thickness (T), and the triangular pockets have a thickness (e), and wherein the thickness of the bottom flange is equal to or greater than the thickness of the at least one pad-up plus the thickness of the triangular pockets.

10. A panel (14) having a textured face (6) comprising triangularly arranged ribs and a thickened area (24) adapted to receive a stiffener (10) so that when the stiffener is placed on the thickened area, triangular pockets are formed, which are delimited by the stiffener and at least some of the ribs extending to the thickened area.

11. A stiffened panel comprising the panel (14) according to claim 10 and a stiffener (10) fixed to the thickened area (24) on the textured face (6) of the panel.

12. A stiffened panel according to claim 11, wherein the stiffener (10) comprises a recess (16) under which portions of the ribs on the thickened area (24) pass.

13. A stiffened panel according to claim 11, wherein the recess (16) is edged.

14. A stiffened panel according to any of claims 11 to 13, wherein the stiffener (10) comprises a flange (22) that faces the thickened area (24) on the textured face (6) of the panel (14).

15. A flight-capable vehicle comprising a stiffened panel according to any of claims 11 to 14.
